(19) **Europäisches Patentamt / European Patent Office / Office européen des brevets**

(11) **EP 3 142 621 B1**

(12) # FASCICULE DE BREVET EUROPEEN

(45) Date de publication et mention de la délivrance du brevet:
**22.08.2018 Bulletin 2018/34**

(21) Numéro de dépôt: **15719736.9**

(22) Date de dépôt: **07.05.2015**

(51) Int Cl.:
***A61G 5/04*** *(2013.01)*

(86) Numéro de dépôt international:
**PCT/EP2015/060009**

(87) Numéro de publication internationale:
**WO 2015/173094 (19.11.2015 Gazette 2015/46)**

(54) **PROCEDE ET DISPOSITIF D'AIDE A LA PROPULSION ELECTRIQUE D'UN SYSTEME ROULANT, KIT POUR FAUTEUIL ROULANT COMPORTANT UN TEL DISPOSITIF ET FAUTEUIL ROULANT EQUIPE D'UN TEL DISPOSITIF**

VERFAHREN UND VORRICHTUNG ZUR UNTERSTÜTZUNG DES ELEKTRISCHEN ANTRIEBS EINES ROLLSYSTEMS, ROLLSTUHLKIT MIT SOLCH EINER VORRICHTUNG UND MIT SOLCH EINER VORRICHTUNG AUSGESTATTETER ROLLSTUHL

METHOD AND DEVICE ASSISTING WITH THE ELECTRIC PROPULSION OF A ROLLING SYSTEM, WHEELCHAIR KIT COMPRISING SUCH A DEVICE AND WHEELCHAIR EQUIPPED WITH SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2014 FR 1454201**

(43) Date de publication de la demande:
**22.03.2017 Bulletin 2017/12**

(73) Titulaires:
• **Centre National de la Recherche Scientifique 75016 Paris (FR)**
• **Université de Valenciennes et du Hainaut Cambrésis 59313 Valenciennes (FR)**

(72) Inventeurs:
• **MOHAMMAD, Sami F-59313 Valenciennes (FR)**

• **GUERRA, Thierry-Marie F-59313 Valenciennes (FR)**
• **PUDLO, Philippe F-59313 Valenciennes (FR)**

(74) Mandataire: **Osha Liang 2, rue de la Paix 75002 Paris (FR)**

(56) Documents cités:
**EP-A2- 2 206 640    WO-A2-2013/006818**

• **MIYAZAWA T ET AL: "A power-assisted wheelchair taking running environment into account", THE 29TH ANNUAL CONFERENCE OF THE IEEE INDUSTRIAL ELECTRONICS SOCIETY, 2003. IECON '03, IEEE SERVICE CENTER, PISCATAWAY, NJ, vol. 2, 2 novembre 2003 (2003-11-02), pages 1343-1348, XP010691084, DOI: 10.1109/IECON.2003.1280252 ISBN: 978-0-7803-7906-0**

**EP 3 142 621 B1**

**Description**

La présente invention concerne un procédé et un dispositif d'aide à la propulsion électrique d'un système roulant. Elle concerne également un kit pour fauteuil roulant comportant un tel dispositif et un fauteuil roulant équipé d'un tel dispositif.

Il existe sur le marché divers types de fauteuils roulants, du plus simple dans une version manuelle aux plus sophistiqués dans une version tout électrique. Face aux difficultés rencontrées dans la vie quotidienne, nombre de personnes à mobilité réduite renoncent au fauteuil roulant manuel. En effet, ces fauteuils nécessitent un effort physique important de la part des utilisateurs et ne sont pas toujours faciles à manoeuvrer, limitant finalement l'autonomie des personnes. Ces dernières doivent alors faire des choix parmi l'ensemble des fauteuils disponibles sur le marché en fonction notamment de leur handicap, de leurs possibilités physiques et de leurs moyens financiers. Une solution pour permettre à ces personnes de retrouver une plus grande autonomie est d'utiliser un fauteuil tout électrique équipé d'un organe de commande. A partir de cet organe de commande, l'utilisateur peut activer le fauteuil dans toutes les directions, le fauteuil étant propulsé au moyen d'un moteur électrique, des mains courantes couplées aux roues étant par ailleurs toujours prévues pour permettre une activation manuelle notamment en cas d'indisponibilité de la propulsion électrique. Une autre solution, moins coûteuse, consiste à équiper un fauteuil roulant classique avec un kit de motorisation additionnel. Parmi les kits de motorisation, il existe les kits d'assistance électrique à la propulsion.

Les kits de motorisation d'aide à la propulsion électrique utilisent un capteur sur chaque main courante pour détecter le mouvement d'entraînement appliqué sur la main courante par l'utilisateur. Ce capteur peut-être un simple commutateur détectant deux états, un mouvement vers l'avant et un mouvement vers l'arrière. Ce peut-être aussi un capteur de type effet Hall qui mesure la position de la main courante par rapport à la roue, la main courante ayant quelques degrés de liberté par rapport à la roue. L'avantage de ce type de capteur est qu'il permet de mesurer l'intensité du mouvement appliqué sur la main courante, ce qui permet d'appliquer une vitesse de propulsion fonction de cette intensité. L'information délivrée par le capteur est transmise via un collecteur tournant jusqu'à une carte de commande électronique qui gère la tension appliquée à chaque moteur de roue.

L'aide à la propulsion peut aussi être commandée par une tierce personne poussant le fauteuil roulant, afin de diminuer l'effort de poussée que doit exercer cette dernière. L'ordre de commande est un organe adapté vers la ou les cartes électroniques de commande moteur.

Cette solution d'aide électrique à la propulsion nécessite donc des capteurs sur chaque main courante, éventuellement un organe de commande pour une tierce personne et des moyens de transmission des informations captées vers l'électronique de commande, en particulier un collecteur tournant au niveau de chaque roue. L'infrastructure nécessaire pour capter les ordres de commande de propulsion notamment via la main courante est donc complexe, volumineuse et coûteuse.

Un but de l'invention est notamment de simplifier cette infrastructure. A cet effet, l'invention a pour objet un procédé d'aide électrique à la propulsion d'un système roulant comportant au moins une roue motrice entraînée par un moteur électrique, le couple appliqué par ledit moteur étant fonction d'un couple de propulsion transmis par au moins un utilisateur à ladite roue motrice, ledit procédé comportant :

- une étape préliminaire de mémorisation d'un modèle à entrée inconnue représentant ledit système lesté et ayant comme donnée de sortie la vitesse de rotation de ladite roue motrice ;

- une étape d'estimation de ladite entrée inconnue, l'entrée inconnue à estimer étant le couple total appliqué à ladite roue, influençant ladite vitesse de rotation, ledit couple total étant estimé à partir de ladite vitesse de rotation par calcul du modèle inverse ;

le couple de propulsion transmis par l'utilisateur étant déduit dudit couple total estimé à partir des autres couples connus constitutifs dudit couple total.

Le couple moteur est par exemple asservi à une consigne, possiblement variable, représentative de la valeur du couple de propulsion transmis par l'utilisateur.

L'invention a également pour objet un dispositif d'aide électrique à la propulsion apte à équiper un système roulant comportant au moins une roue motrice, ledit dispositif comportant au moins :

- un moteur électrique apte à être fixé à ladite roue motrice pour entraîner celle-ci en rotation ;
- un capteur apte à mesurer la vitesse de rotation de ladite roue motrice ;
- des moyens de traitement :

  - recevant en entrée la mesure de ladite vitesse de rotation ;
  - mémorisant un modèle à entrée inconnue représentant ledit système lesté et ayant comme donnée de sortie ladite vitesse de rotation, l'entrée inconnue étant le couple total appliqué à ladite roue, influençant ladite vitesse de rotation ;

- transmettant en sortie une consigne de commande du couple moteur à appliquer à ladite roue, ladite consigne étant représentative de la valeur du couple de propulsion transmis par au moins un utilisateur à ladite roue,

lesdits moyens de traitement estimant ledit couple total par estimation de l'entrée inconnue représentant ledit couple total à partir de ladite vitesse de rotation par calcul du modèle inverse, le couple appliqué par l'utilisateur étant déduit dudit couple total à partir des autres couples connus constitutifs du couple total estimé.

Le moteur étant par exemple du type « brushless », ledit capteur est par exemple intégré dans le moteur, la vitesse de rotation de ladite roue étant mesurée à partir de la vitesse rotorique dudit moteur. Le couple moteur est par exemple asservi à ladite consigne.

L'invention a également pour objet un kit d'aide électrique à la propulsion pour fauteuil roulant comportant deux roues motrices, caractérisé en ce qu'il comporte au moins :

- deux moteurs électriques, chaque moteur étant apte à être fixé à une roue motrice pour entraîner celle-ci en rotation ;
- deux capteurs, chacun étant apte à mesurer la vitesse de rotation d'une roue motrice ;
- pour chaque roue motrice, des moyens de traitement :

  - recevant en entrée la mesure de sa vitesse de rotation ;
  - mémorisant un modèle à entrée inconnue représentant ledit système lesté et ayant comme donnée de sortie la vitesse de rotation ladite roue, l'entrée inconnue étant le couple total appliqué à ladite roue, influençant ladite vitesse de rotation ;
  - transmettant en sortie une consigne de commande du couple moteur à appliquer à ladite roue, ladite consigne étant possiblement variable et représentative de la valeur du couple de propulsion transmis par au moins un utilisateur à ladite roue,

  lesdits moyens de traitement estimant ledit couple total par estimation de l'entrée inconnue représentant ledit couple total à partir de ladite vitesse de rotation par calcul du modèle inverse, le couple appliqué par l'utilisateur étant déduit dudit couple total à partir des autres couples connus constitutifs du couple total estimé.

Lesdits moteurs étant par exemple du type « brushless », chaque capteur est par exemple intégré dans un desdits moteurs, la vitesse de rotation d'une roue étant mesurée à partir de la vitesse rotorique du moteur.

Les moyens de traitement sont par exemple implantés sur une ou plusieurs cartes de pilotage, apte à être fixée sur le châssis dudit fauteuil, une liaison bidirectionnelle reliant ladite carte à chaque moteur pour transmettre ladite consigne à chaque moteur et recevoir ladite mesure de vitesse de rotation.

Pour chaque roue, le couple de propulsion est par exemple transmis via une main courante couplée à la roue. Pour chaque roue, le couple de propulsion peut également être transmis par une tierce personne poussant ledit fauteuil. Pour chaque roue, le couple de propulsion peut également être transmis par une propulsion podale, i.e. l'utilisateur utilise une de ses jambes ou les deux pour propulser le fauteuil.

L'invention a également pour objet un fauteuil roulant électrique comportant un dispositif tel que décrit précédemment, ledit fauteuil comportant deux roues motrices, un moteur électrique étant fixé à chaque roue pour entraîner celle-ci en rotation, pour chaque roue motrice, les moyens de traitement :

- recevant en entrée une mesure de la vitesse de rotation de ladite roue ;
- mémorisant un modèle considérant une entrée inconnue représentant ledit système lesté et ayant comme donnée de sortie la vitesse de rotation ladite roue, l'entrée inconnue étant le couple total appliqué à ladite roue, influençant ladite vitesse de rotation ;
- transmettant en sortie une consigne de commande du couple moteur à appliquer à ladite roue, ladite consigne étant représentative de la valeur du couple de propulsion transmis par au moins un utilisateur à ladite roue,

lesdits moyens de traitement estimant ledit couple total par estimation de l'entrée inconnue représentant ledit couple total, le couple appliqué par l'utilisateur étant déduit dudit couple total à partir des autres couples connus constitutifs du couple total estimé, lesdits moyens de traitement estimant ledit couple total à partir de ladite vitesse de rotation par calcul du modèle inverse.

Les moyens de traitement sont par exemple implantés sur une même carte de pilotage, fixée sur le châssis dudit fauteuil, une liaison bidirectionnelle reliant ladite carte à chaque moteur pour transmettre ladite consigne à chaque moteur et recevoir ladite mesure de vitesse de rotation.

Pour chaque roue, le couple de propulsion est par exemple transmis via une main courante couplée à la roue ou par une tierce personne poussant le fauteuil.

D'autres caractéristiques et avantages apparaîtront à l'aide des dessins annexés qui représentent :

- La figure 1, une personne de déplaçant dans un fauteuil roulant à propulsion manuelle ;
- Les figures 2a et 2b, des exemples de capteurs utilisés pour des dispositifs d'aide électrique à la propulsion selon l'art antérieur ;
- La figure 3, une illustration du principe de mise en oeuvre de l'invention ;
- La figure 4, une présentation des composants d'un dispositif selon l'invention.

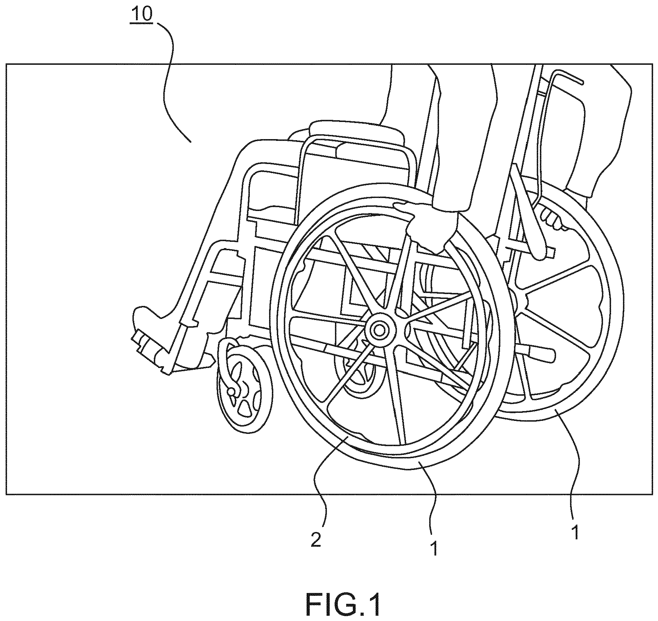

La figure 1 représente une personne se déplaçant dans un fauteuil roulant manuel. La personne commande le déplacement du fauteuil en exerçant une poussée circulaire avant ou arrière sur la main courante 2 couplée à chaque roue 1, entraînant le roulement des roues. Ce mode de déplacement demande des efforts physiques, fatigant voire rédhibitoires pour les utilisateurs.

Un dispositif d'aide électrique à la propulsion permet de réduire ou de supprimer ces efforts physiques. Un tel dispositif comporte deux moteurs électriques, un moteur étant couplé à chaque roue pour l'entraîner en rotation. Les moteurs utilisés sont par exemple du type moteur sans balais encore appelés moteurs «brushless». Le couple moteur délivré par un moteur est fonction du mouvement d'entraînement appliqué sur la main courante 2. A cet effet, un capteur est affecté à chaque main courante pour détecter la présence et l'intensité de ce mouvement. Si un mouvement d'entraînement vers l'avant est détecté sur chaque main courante, les moteurs propulsent le fauteuil vers l'avant. Si les capteurs détectent l'intensité du mouvement, la vitesse de propulsion est plus ou moins grande selon cette intensité. Pour se diriger vers la gauche ou vers la droite, on entraîne l'une ou l'autre des mains courantes. Dans le cas d'utilisation d'un capteur à commutation, de type « on/off », l'information de commande est binaire. On détecte un mouvement vers l'avant ou vers l'arrière sur la main courante. Dans le cas d'utilisation d'un capteur à effet Hall, on couple la main courante 2 à une roue 1 avec un degré de liberté circulaire de quelques degrés, une dizaine de degrés par exemple. Dans ce cas, le capteur à effet Hall peut détecter un écart angulaire entre la roue et la main courante fonction de l'intensité du mouvement appliqué par l'utilisateur sur la main courante. Le capteur à effet Hall peut alors délivrer un signal fonction de cette intensité pour commander le moteur d'entraînement de la roue, le couple moteur délivré par le moteur étant fonction de cette intensité.

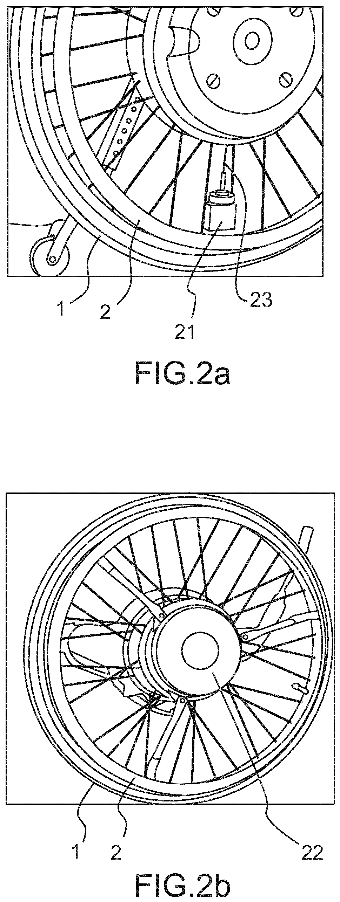

Les figures 2a et 2b présentent deux exemples de capteurs détectant les mouvements impulsés à une main courante, ces capteurs étant des capteurs à effet Hall. Dans l'exemple de la figure 2a, le capteur 21 est fixé sur les rayons de la roue 1, à proximité de la jante. L'information d'écart angulaire entre la main courante et la roue est transmise par un fil 23 vers une carte électronique de commande via un collecteur tournant non représenté. Dans l'exemple de la figure 2b, le capteur 22 est fixé au niveau du moyeu de la roue. Ces capteurs 21, 22, le câblage associé et les collecteurs tournant complexifient le montage et augmente le coût du fauteuil. En particulier, dans le cas d'un kit d'aide électrique à la propulsion, ces composants complexifient par ailleurs le montage et le démontage du kit sur un fauteuil roulant.

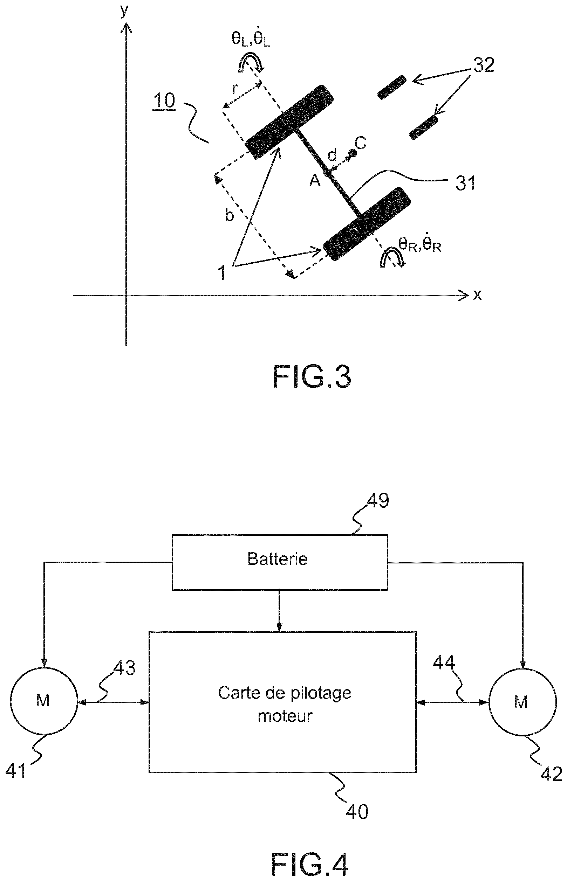

La figure 3 illustre le principe de réalisation d'un dispositif d'aide électrique à la propulsion selon l'invention par une vue de dessus d'éléments constitutifs d'un modèle de fauteuil roulant chargé par une personne. Selon l'invention, les capteurs physiques sont remplacés par des capteurs virtuels. En d'autres termes, la détection du couple de propulsion appliqué par l'utilisateur sur une main courante n'est plus effectuée par un capteur physique mais ce couple de propulsion est déterminé selon une méthode basée sur le principe d'estimation des entrées inconnues du système constitué du fauteuil roulant. Le fauteuil lesté peut être modélisé car tous les paramètres nécessaires à l'établissement du modèle sont connus. A partir du modèle, on applique une méthode d'estimation d'état du modèle soumis à l'influence d'entrées inconnues où les entrées inconnues sont les couples exercés sur les roues par l'utilisateur via les mains courantes, ces couples étant exercés sur les mains courantes. A partir des paramètres du modèle et de la connaissance de données sorties, en l'occurrence la vitesse de rotation des roues, on remonte à la connaissance des couples exercés par l'utilisateur, par calcul du modèle inverse. Cette méthode a l'avantage d'être simple à mettre en oeuvre. D'autres méthodes peuvent bien sûr être utilisées.

En référence à la figure 3, les paramètres du modèle sont donnés ci-après, en considérant le fauteuil équipé d'un dispositif de motorisation électrique, pour l'aide à la propulsion, tel que décrit précédemment, mais sans les capteurs physiques et l'infrastructure associée. :

- $m$, la masse du fauteuil lesté, c'est-à-dire chargé par l'utilisateur ;
- $r$, le rayon des roues motrices 1 ;
- $K$, le coefficient de frottement ;
- $d$, la distance entre le centre de gravité C et le plan vertical passant par l'axe des roues motrices 1 ;
- $b$, la distance entre les roues motrices 1 ;
- $I_A$, le moment d'inertie du fauteuil par rapport à l'axe vertical passant par le point A, point milieu de l'axe des deux roues motrices 1 ;

- $I_0$, le moment d'inertie d'une roue motrice 1.

Les roue directrices 32 n'interviennent pas dans le modèle en tant que telles et sont uniquement prises en compte dans la masse du fauteuil lesté.

La masse $m$ de l'ensemble constitué du fauteuil roulant et de la personne n'est pas exactement connue sauf à faire une mesure particulière pour chaque utilisateur. De même la position exacte du centre de gravité C n'est pas connue. Cependant, pour l'établissement du modèle, on considère une masse $m$ standard pour la personne ainsi qu'une distance standard $d$ du centre de gravité à l'axe 31 des roues. Cette approche donne une précision suffisante en pratique.

$M_R$, $M_L$, sont respectivement le couple exercé sur la roue droite et le couple exercé sur la roue gauche. Ces couples sont obtenus par une méthode d'estimation des entrées inconnues d'un modèle, le modèle étant défini à partir des paramètres définis ci-dessus. Pour chaque roue, le couple $M_R$, $M_L$ est la somme du couple de propulsion électrique produit par le moteur, du couple de propulsion manuel ou mécanique exercé par l'utilisateur et d'un couple de gravité exercé par ailleurs sur la roue. Le couple produit par le moteur électrique et le couple produit par la gravitation sont connus, on peut donc déduire le couple de propulsion exercé par l'utilisateur comme le montre les équations ci-après.

Eventuellement, d'autres couples connus sont constitutifs du couple total exercé sur les roues, par exemple le couple imposé par la force du vent ou encore le couple de frottement des roues sur la route. Le couple de gravité sur une pente, qui contribue également au couple total, peut être calculé connaissant le poids du fauteuil lesté ainsi que l'angle d'inclinaison de la pente sur laquelle roule le fauteuil. Celui-ci peut être mesuré par un accéléromètre.

Dans tous les cas, le couple total exercé sur le fauteuil est estimé en connaissant uniquement la géométrie du fauteuil et la masse du fauteuil lesté, et en connaissant la vitesse de rotation des roues, la géométrie du fauteuil étant notamment définie par les paramètres du modèle ci-dessus.

Les équations du mouvement du fauteuil peuvent être obtenues en appliquant les lois de la mécanique classique, $\theta_R$, $\theta_L$ étant respectivement les angles de rotation de la roue droite et de la roue gauche autour de l'axe 31.

$$\alpha\ddot{\theta}_R + \beta\ddot{\theta}_L = M_R - K\dot{\theta}_R$$

$$\beta\ddot{\theta}_R + \alpha\ddot{\theta}_L = M_L - K\dot{\theta}_L$$

$$\alpha = \frac{mr^2}{4} + \frac{\left(I_A + md^2\right)r^2}{b^2} + I_0$$

$$\beta = \frac{mr^2}{4} - \frac{\left(I_A + md^2\right)r^2}{b^2}$$

On peut réécrire ces équations différemment, afin d'extraire les accélérations angulaires des roues :

$$\ddot{\theta}_R = \frac{\alpha}{\alpha^2 - \beta^2}\left(M_R - K\dot{\theta}_R - \frac{\beta}{\alpha}M_L + \frac{\beta}{\alpha}K\dot{\theta}_L\right)$$

$$\ddot{\theta}_L = \frac{\alpha}{\alpha^2 - \beta^2}\left(M_L - K\dot{\theta}_L - \frac{\beta}{\alpha}M_R + \frac{\beta}{\alpha}K\dot{\theta}_R\right)$$

le coefficient K pouvant être estimé à partir de mesures sur banc d'essais par exemple, sa précision n'étant pas essentielle étant donnée la robustesse de la méthode d'estimation utilisée.

Et enfin sous forme de représentation d'état avec le vecteur d'état $x = \begin{bmatrix} \dot{\theta}_R \\ \dot{\theta}_L \end{bmatrix}$ et le vecteur d'entrée

$$u = \begin{bmatrix} M_R \\ M_L \end{bmatrix}$$ et les deux sorties qui sont les états $$y = \begin{bmatrix} \dot{\theta}_R \\ \dot{\theta}_L \end{bmatrix} :$$

$$\dot{x} = Ax + Bu$$

$$y = Cx$$

$$A = \frac{K}{\alpha^2 - \beta^2} \begin{bmatrix} -\alpha & \beta \\ \beta & -\alpha \end{bmatrix}, B = \frac{1}{\alpha^2 - \beta^2} \begin{bmatrix} \alpha & -\beta \\ -\beta & \alpha \end{bmatrix}, C = \begin{bmatrix} 1 & 0 \\ 0 & 1 \end{bmatrix}$$

Dans le cas idéal sans bruits de mesure et où la matrice $B$ est inversible, ce qui est le cas en général, il est facile à trouver l'observateur de l'entrée $u$ :

$$u = B^{-1}\left(\dot{x} - Ax\right)$$

Cela signifie qu'à partir des vitesses angulaires des roues on peut calculer le couple $M_R$, $M_L$ exercé sur chaque roue.

Ce couple est par ailleurs la somme de tous les couples présents autour de l'axe de la roue :

$$M_R = M_{RP} + M_{RM} + M_{RG}$$

- $M_{RP}$ est le couple de propulsion manuel exercé sur la roue droite par l'utilisateur, ce couple étant la donnée recherchée ;
- $M_{RM}$ est le couple exercé par le moteur droit, ce couple étant connu ;
- $M_{RG}$ est le couple exercé par la gravité sur la roue droite, ce couple étant également connu.

On en déduit donc le couple de propulsion $M_{RP}$ sur la roue droite, exercé par l'utilisateur :

$$M_{RP} = M_R - M_{RM} - M_{RG.}$$

On déduit de même le couple de propulsion $M_{LP}$ sur la roue gauche, exercé par l'utilisateur :

$$M_{LP} = M_L - M_{LM} - M_{LG.}$$

$M_{LM}$ est le couple exercé par le moteur gauche et $M_{LG}$ est le couple exercé par la gravité sur la roue gauche, ces couples étant connus.

Ainsi, à partir de la connaissance des vitesses angulaires des roues droites et gauches $\dot{\theta}_R$ et $\dot{\theta}_L$, on peut connaître les couples de propulsion, ou d'entraînement, exercé par l'utilisateur sur les roues droite et gauche.

La connaissance des vitesses $\dot{\theta}_R$ et $\dot{\theta}_L$ peut être connue facilement sans besoin de capteurs particuliers. En effet, la vitesse de rotation des roues peut être obtenue simplement à partir de capteurs de position rotorique intégrés dans les moteurs « brushless » utilisés. Ces capteurs sont par exemple des capteurs à effet Hall ou des capteurs de type codeur incrémental. La connaissance de la vitesse du rotor de chaque moteur permet de connaître la vitesse de la roue qu'il équipe.

Avantageusement, l'invention s'applique également pour capter la propulsion exercée par une tierce personne, cette propulsion étant par exemple exercée sur des poignées à l'arrière du fauteuil. En effet, cette propulsion se traduit finalement par un couple de propulsion exercé sur les roues, au même titre qu'une propulsion exercée via les mains courantes.

A partir de l'estimation du couple de propulsion exercé par l'utilisateur sur la main courante et/ou par une tierce personne, on peut réguler la vitesse de rotation des roues par les moteurs. La consigne de valeur de vitesse de rotation de la roue droite est fonction du couple de propulsion exercé sur la roue droite et la consigne de valeur de vitesse de rotation de la roue gauche est fonction du couple de propulsion exercé sur la roue gauche, ces couples de propulsion étant estimés par la méthode décrite précédemment à partir des mesures des vitesses de rotation des roues. La consigne est possiblement variable. Ces mesures sont effectuées à partir des capteurs intégrés dans les moteurs « brushless », donc sans besoin de composants supplémentaires. Les consignes de vitesse peuvent être transmises aux moteurs sous forme de tensions électriques. Une interface adaptée permet de commander la tension d'alimentation du moteur à partir de cette consigne, la vitesse de rotation étant directement fonction de cette tension d'alimentation. Dans un autre mode de commande, à modulation de largeur d'impulsion appelée PWM, un microcontrôleur délivre un signal en créneaux dont la période est fonction de la consigne.

La figure 4 présente les composants d'un dispositif d'aide électrique à propulsion selon l'invention. Ce dispositif comporte au moins une carte 40 de pilotage des moteurs et deux moteurs 41, 42. Chaque moteur est apte à être couplé mécaniquement à une roue 1 d'un fauteuil roulant. Le dispositif comporte également une batterie 49 fournissant l'énergie électrique aux moteurs et alimentant la carte 40. Les moteurs sont par exemple de type « brushless ». Classiquement, un onduleur non représenté est couplé à chaque moteur pour transformer la tension continue fournie par la batterie en tension alternative. Cet onduleur peut être placé au niveau des moteurs ou au niveau du support de la batterie.

Ce dispositif peut constituer à lui seul un kit d'aide électrique à la propulsion ou former une partie d'un tel kit. Ce dispositif peut être utilisé directement pour réaliser un fauteuil électrique, sans qu'il soit sous forme de kit.

La carte 40 de pilotage des moteurs peut être remplacée par deux cartes de pilotage, une carte étant affectée à chaque moteur 41, 42. Les moteurs comportent des moyens de fixation sur les roues, ces moyens de fixations étant classiques et connus par ailleurs.

La carte de pilotage 40 peut être installée sur un endroit fixe du fauteuil, par exemple sur un support ou dans un boîtier fixé sur le châssis, en dessous du siège, et de préférence à un endroit peu éloigné des moteurs. Une liaison bidirectionnelle 43 vers un premier moteur 41 et une liaison bidirectionnelle 44 vers le deuxième moteur 42 permet de transmettre les informations de vitesse issues des capteurs des moteurs vers la carte 40 et de transmettre les consignes de vitesses de rotation depuis la carte 40. Ces liaisons sont par exemple filaires. Elles peuvent être également du type liaison sans fil, à condition de prévoir les moyens d'émission et de réception adaptés sur la carte et au niveau des moteurs.

La carte de pilotage 40 comporte des moyens de traitement calculant les couples de propulsion $M_{RP}$, $M_{LP}$ exercés par l'utilisateur via la main courante et/ou par une tierce personne, à partir de la connaissance des vitesses angulaires $\dot\theta_R$, $\dot\theta_L$ des roues. Les valeurs de ces vitesses sont transmises depuis les moteurs. Les moyens de traitements effectuent dans une première phase le calcul du couple $M_R$, $M_L$ exercé sur chaque roue. Dans une deuxième phase, les moyens de traitement effectuent le calcul de la valeur du couple de propulsion $M_{RP}$, $M_{LP}$ exercé sur chaque roue, à partir de la connaissance du couple moteur et du couple de gravité appliqués sur la roue et connus par ailleurs. Pour effectuer ces calculs, les moyens de traitement intègrent en mémoire le modèle du fauteuil permettant ces calculs, en particulier les moyens de calcul mémorisent les paramètres du modèle. Pour chaque roue, une valeur de consigne proportionnelle à la valeur du couple $M_{RP}$, $M_{LP}$ est transmise à son moteur d'entraînement 41, 42, sous forme de tension par exemple. Deux boucles d'asservissement de vitesse sont par exemple réalisées, l'une pour la roue droite et l'autre pour la roue gauche, avec comme consigne d'entrée le couple de propulsion exercé sur la roue.

Il est possible de prévoir d'autres modes d'exploitation des couples de propulsion $M_{RP}$, $M_{LP}$ estimés.

L'estimation du couple total appliqué sur chaque roue motrice peut être faite à partir de chaque impulsion de propulsion appliquée par l'utilisateur sur la main courante associée ou selon une cadence fixe donnée, par exemple quelques millisecondes.

La figure 4 montre la simplicité d'un dispositif d'aide électrique à la propulsion selon l'invention. En particulier, un tel dispositif ne nécessite pas de capteurs physiques et leurs infrastructures associées. Le couple de propulsion manuel exercé sur chaque roue par l'utilisateur, et/ou par une tierce personne, est simplement calculé à partir de la vitesse de rotation de la roue, vitesse également simple à obtenir, sans ajout de matériel.

L'invention a été décrite pour l'aide à la propulsion électrique d'un fauteuil roulant. Elle peut s'appliquer pour d'autres systèmes roulants, comportant au moins une roue motrice et dont la propulsion d'origine électrique est commandée par un couple de propulsion, par exemple manuel, transmis à cette roue motrice. En particulier, l'invention peut s'appliquer pour l'aide électrique à la propulsion sur des bicyclettes ou d'autres engins de locomotion du même type.

## Revendications

1. Procédé d'aide électrique à la propulsion d'un système roulant (10) comportant au moins une roue motrice (1) entraînée par un moteur électrique (41, 42), le couple appliqué par ledit moteur étant fonction d'un couple de propulsion transmis par au moins un utilisateur à ladite roue motrice, **caractérisé en ce que** ledit procédé comporte :

   - une étape préliminaire de mémorisation d'un modèle à entrée inconnue représentant ledit système lesté, fonction de la géométrie et de la masse dudit système lesté, et ayant comme donnée de sortie la vitesse de rotation de ladite roue motrice ;
- une étape d'estimation de ladite entrée inconnue, l'entrée inconnue à estimer étant le couple total appliqué à ladite roue, influençant ladite vitesse de rotation, ledit couple total étant estimé à partir de ladite vitesse de rotation par calcul du modèle inverse ;

le couple de propulsion transmis par l'utilisateur étant déduit dudit couple total estimé, à partir des autres couples connus constitutifs dudit couple total.

2. Procédé selon la revendication 1, **caractérisé en ce que** le couple moteur est asservi à une consigne, possiblement variable, représentative de la valeur du couple de propulsion transmis par l'utilisateur.

3. Dispositif d'aide électrique à la propulsion apte à équiper un système roulant (10) comportant au moins une roue motrice, **caractérisé en ce que** ledit dispositif comporte au moins :

- un moteur électrique (41, 42) apte à être fixé à ladite roue motrice (1) pour entraîner celle-ci en rotation ;
- un capteur apte à mesurer la vitesse de rotation de ladite roue motrice (1) ;
- des moyens de traitement (40) :

- recevant en entrée la mesure de ladite vitesse de rotation ;
- mémorisant un modèle à entrée inconnue représentant ledit système lesté, fonction de la géométrie et de la masse dudit système lesté, et ayant comme donnée de sortie ladite vitesse de rotation, l'entrée inconnue étant le couple total appliqué à ladite roue, influençant ladite vitesse de rotation ;

- transmettant en sortie une consigne de commande du couple moteur à appliquer à ladite roue, ladite consigne étant représentative de la valeur du couple de propulsion transmis par au moins un utilisateur à ladite roue,

lesdits moyens de traitement estimant ledit couple total par estimation de l'entrée inconnue représentant ledit couple total à partir de ladite vitesse de rotation par calcul du modèle inverse, le couple appliqué par l'utilisateur étant déduit dudit couple total à partir des autres couples connus constitutifs du couple total estimé.

4. Dispositif selon la revendication 3, **caractérisé en ce que** le moteur (41, 42) étant du type « brushless », ledit capteur est intégré dans le moteur, la vitesse de rotation de ladite roue étant mesurée à partir de la vitesse rotorique dudit moteur.

5. Dispositif selon l'une quelconque des revendications 3 ou 4, **caractérisé en ce que** le couple moteur est asservi à ladite consigne.

6. Kit d'aide électrique à la propulsion pour fauteuil roulant (10) comportant deux roues motrices (1), **caractérisé en ce qu'**il comporte au moins :

- deux moteurs électriques (41, 42), chaque moteur étant apte à être fixé à une roue motrice (1) pour entraîner celle-ci en rotation ;
- deux capteurs, chacun étant apte à mesurer la vitesse de rotation d'une roue motrice ;
- pour chaque roue motrice, des moyens de traitement (40) :

- recevant en entrée la mesure de sa vitesse de rotation ;
- mémorisant un modèle à entrée inconnue représentant ledit fauteuil lesté, fonction de la géométrie et de la masse dudit fauteuil lesté, et ayant comme donnée de sortie la vitesse de rotation ladite roue, l'entrée inconnue étant le couple total appliqué à ladite roue, influençant ladite vitesse de rotation ;
- transmettant en sortie une consigne de commande du couple moteur à appliquer à ladite roue, ladite consigne étant possiblement variable et représentative de la valeur du couple de propulsion transmis par au moins un utilisateur à ladite roue,

lesdits moyens de traitement estimant ledit couple total par estimation de l'entrée inconnue représentant ledit couple total à partir de ladite vitesse de rotation par calcul du modèle inverse, le couple appliqué par l'utilisateur étant déduit dudit couple total à partir des autres couples connus constitutifs du couple total estimé.

7. Kit selon la revendication 6, **caractérisé en ce que** lesdits moteurs (41, 42) étant du type « brushless », chaque capteur est intégré dans un desdits moteurs, la vitesse de rotation d'une roue étant mesurée à partir de la vitesse rotorique du moteur.

8. Kit selon l'une quelconque des revendications 6 ou 7, **caractérisé en ce que** les moyens de traitement (40) sont implantés sur une ou plusieurs cartes de pilotage, apte à être fixée sur le châssis dudit fauteuil, une liaison bidirectionnelle (43, 44) reliant ladite carte à chaque moteur (41, 42) pour transmettre ladite consigne à chaque moteur et recevoir ladite mesure de vitesse de rotation.

9. Kit selon l'une quelconque des revendications 6 à 8, **caractérisé en ce que**, pour chaque roue, le couple de propulsion est transmis via une main courante (2) couplée à la roue (1).

10. Kit selon l'une quelconque des revendications 6 à 9, **caractérisé en ce que**, pour chaque roue, le couple de propulsion est transmis par une tierce personne poussant ledit fauteuil.

11. Fauteuil roulant électrique, **caractérisé en ce qu'**il comporte un dispositif selon l'une quelconque des revendications 3 à 5, ledit fauteuil comportant deux roues motrices (1), un moteur électrique (41, 42) étant fixé à chaque roue pour entraîner celle-ci en rotation, pour chaque roue motrice, les moyens de traitements (40) :

   - recevant en entrée une mesure de la vitesse de rotation de ladite roue ;
   - mémorisant un modèle considérant une entrée inconnue représentant ledit fauteuil lesté, fonction de la géométrie et de la masse dudit fauteuil lesté, et ayant comme donnée de sortie la vitesse de rotation ladite roue, l'entrée inconnue étant le couple total appliqué à ladite roue, influençant ladite vitesse de rotation ;
   - transmettant en sortie une consigne de commande du couple moteur à appliquer à ladite roue, ladite consigne étant représentative de la valeur du couple de propulsion transmis par au moins un utilisateur à ladite roue,

   lesdits moyens de traitement estimant ledit couple total par estimation de l'entrée inconnue représentant ledit couple total à partir de ladite vitesse de rotation par calcul du modèle inverse, le couple appliqué par l'utilisateur étant déduit dudit couple total à partir des autres couples connus constitutifs du couple total estimé.

12. Fauteuil roulant électrique selon la revendication 11, **caractérisé en ce que** les moyens de traitement (40) sont implantés sur une même carte de pilotage, fixée sur le châssis dudit fauteuil, une liaison bidirectionnelle (43, 44) reliant ladite carte à chaque moteur (41, 42) pour transmettre ladite consigne à chaque moteur et recevoir ladite mesure de vitesse de rotation.

13. Fauteuil roulant électrique selon l'une quelconque des revendications 11 ou 12, **caractérisé en ce que**, pour chaque roue, le couple de propulsion est transmis via une main courante (2) couplée à la roue (1).

14. Fauteuil roulant électrique selon l'une quelconque des revendications 11 à 13, **caractérisé en ce que**, pour chaque roue, le couple de propulsion est transmis par une tierce personne poussant ledit fauteuil.


**Patentansprüche**

1. Verfahren zur elektrischen Unterstützung des Antriebs eines Rollsystems (10), umfassend zumindest ein Antriebsrad (1), das von einem Elektromotor (421, 42) angetrieben wird, wobei das von dem Motor aufgebrachte Drehmoment sich aus einem Antriebsdrehmoment ergibt, das von zumindest einem Nutzer auf dieses Antriebsrad aufgebracht wird, **dadurch gekennzeichnet, dass** das besagte Verfahren umfasst:

   - einen vorläufigen Schritt des Speicherns eines Modells einer unbekannten Eingabe, die entsprechend der Geometrie und der Masse des besagten belasteten Systems das besagte belastete System darstellt, und als Ausgabedaten die Drehgeschwindigkeit des besagten Antriebsrads hat;
   - einen Schritt des Schätzens der besagten unbekannten Eingabe, wobei die zu schätzende, unbekannte Eingabe das auf das besagte Rad aufgebrachte Gesamtdrehmoment ist und die besagte Drehgeschwindigkeit beeinflusst, wobei dieses Gesamtdrehmoment aus der besagten Drehgeschwindigkeit durch Errechnen eines inversen Modells geschätzt wird; wobei das von dem Nutzer übertragene Antriebsdrehmoment anhand der anderen bekannten Drehmomente von dem besagten, geschätzten Gesamtdrehmoment abgezogen wird.

2. Verfahren nach Anspruch 1, **dadurch gekennzeichnet, dass** das Motordrehmoment auf einen gegebenenfalls variablen Sollwert geregelt wird, der den Wert des von dem Nutzer übertragenen Antriebsdrehmoments darstellt.

3. Vorrichtung zur elektrischen Unterstützung des Antriebs, der zum Ausrüsten eines Rollsystems (10) geeignet ist, aufweisend zumindest ein Antriebsrad, **dadurch gekennzeichnet, dass** diese Vorrichtung zumindest umfasst:

    - einen Elektromotor (41, 42), der geeignet ist, an besagtem Antriebsrad (1) befestigt zu werden, um dieses in Rotation zu versetzen;
    - einen Sensor, der geeignet ist, die Drehgeschwindigkeit des besagten Antriebsrads (1) zu messen;
    - wobei die Verarbeitungseinrichtungen (40):

        - als Eingabe die Messung der besagten Drehgeschwindigkeit empfangen;
        - ein Modell unbekannter Eingabe speichern, das das besagte belastete System darstellt, entsprechend der Geometrie und der Masse des besagten belasteten Systems, und als Ausgabedaten die besagte Drehgeschwindigkeit hat, wobei die unbekannte Eingabe das Gesamtdrehmoment ist, das auf das besagte Rad aufgebracht wird, und die besagte Drehgeschwindigkeit beeinflusst;
        - als Ausgabe einen Sollwert der Steuerung des auf das besagte Rad aufzubringenden Motordrehmoments übertragen, wobei dieser Sollwert den Wert des von zumindest einem Nutzer auf das besagte Rad übertragenen Antriebsdrehmoments darstellt,

    die besagten Verarbeitungseinrichtungen das besagte Gesamtdrehmoment durch Schätzen der unbekannten Eingabe, die das besagte Gesamtdrehmoment darstellt, aus der besagten Drehgeschwindigkeit durch Berechnen des inversen Modells schätzen, wobei das von dem Nutzer aufgebrachte Drehmoment von dem besagten Gesamtdrehmoment abgezogen wird, auf Grundlage der anderen, unbekannten Drehmomente, die das geschätzte Gesamtdrehmoment bilden.

4. Vorrichtung nach Anspruch 3, **dadurch gekennzeichnet, dass** der Motor (41, 42) vom "bürstenlosen" Typ ist, wobei der Sensor im Motor integriert ist, wobei die Drehgeschwindigkeit des Rads auf Grundlage der Drehzahl des Motors gemessen wird.

5. Vorrichtung nach einem der Ansprüche 3 oder 4, **dadurch gekennzeichnet, dass** das Drehmoment des Motors auf den besagten Sollwert geregelt wird.

6. Kit zur Unterstützung des elektrischen Antriebs für einen Rollstuhl (10), der zwei Antriebsräder (1) aufweist, **dadurch gekennzeichnet, dass** es zumindest aufweist:

    - zwei Elektromotoren (41, 42), wobei jeder Motor geeignet ist, an einem Antriebsrad (1) befestigt zu werden, um dieses in Rotation zu versetzen;
    - zwei Sensoren, wobei diese jeweils geeignet sind, die Drehgeschwindigkeit eines Antriebsrads zu messen;
    - die Verarbeitungseinrichtungen (40) für jedes Antriebsrad:

        - als Eingabe die Messung von besagter Drehgeschwindigkeit empfangen;
        - ein Modell unbekannter Eingabe speichern, das den besagten belasteten Rollstuhl darstellt, entsprechend der Geometrie und der Masse des besagten belasteten Rollstuhls, und als Ausgabedaten die besagte Drehgeschwindigkeit hat, wobei die unbekannte Eingabe das Gesamtdrehmoment ist, das auf das besagte Rad aufgebracht wird, und die besagte Drehgeschwindigkeit beeinflusst;
        - als Ausgabe einen Sollwert der Steuerung des auf das besagte Rad aufzubringenden Motordrehmoments übertragen, wobei dieser Sollwert gegebenenfalls variabel ist und den Wert des von zumindest einem Nutzer auf das besagte Rad übertragenen Antriebsdrehmoments darstellt,

    wobei die besagten Verarbeitungseinrichtungen das besagte Gesamtdrehmoment durch Schätzen der unbekannten Eingabe, die das besagte Gesamtdrehmoment darstellt, aus der besagten Drehgeschwindigkeit durch Berechnen des inversen Modells schätzen, wobei das von dem Nutzer aufgebrachte Drehmoment von dem besagten Gesamtdrehmoment abgezogen wird, auf Grundlage der anderen, unbekannten Drehmomente, die das geschätzte Gesamtdrehmoment bilden.

7. Kit nach Anspruch 6, **dadurch gekennzeichnet, dass** die Motoren (41, 42) vom "bürstenlosen" Typ sind, wobei jeder Sensor in einem der Motoren integriert ist, wobei die Drehgeschwindigkeit eines Rades auf Grundlage der Drehzahl des Motors gemessen wird.

8. Kit nach einem der Ansprüche 6 oder 7, **dadurch gekennzeichnet, dass** die Verarbeitungseinrichtungen (40) auf einer oder mehr Steuerplatinen vorgesehen sind, die am Chassis des Rollstuhls befestigt werden können, wobei eine bidirektionale Verknüpfung (43, 44) die besagte Platine mit besagtem Motor (41, 42) verbindet, um besagten Sollwert an jeden Motor zu übermitteln und besagte Messung der Drehgeschwindigkeit zu empfangen.

9. Kit nach einem der Ansprüche 6 bis 8, **dadurch gekennzeichnet, dass** für jedes Rad das Antriebsdrehmoment über einen Handlauf (2) übertragen wird, der an das Rad (1) gekoppelt ist.

10. Kit nach einem der Ansprüche 6 bis 9, **dadurch gekennzeichnet, dass** für jedes Rad das Antriebsdrehmoment über eine den Rollstuhl schiebende, dritte Person übertragen wird.

11. Elektrischer Rollstuhl, **dadurch gekennzeichnet, dass** er eine Vorrichtung nach einem der Ansprüche 3 bis 5 umfasst, wobei dieser Rollstuhl zwei Antriebsräder (1) umfasst, und wobei an jedem Rad ein Elektromotor (41, 42) befestigt ist, um dieses in Rotation zu versetzen, wobei für jedes Antriebsrad die Verarbeitungseinrichtungen (40):

   - als Eingabe eine Messung der Drehgeschwindigkeit des besagten Rades empfangen;
   - ein Modell speichern, das eine unbekannte Eingabe berücksichtigt, die besagten belasteten Rollstuhl darstellt, entsprechend der Geometrie und der Masse des besagten belasteten Rollstuhls, und als Ausgabedaten die besagte Drehgeschwindigkeit des besagten Rads hat, wobei die unbekannte Eingabe das Gesamtdrehmoment ist, das auf das besagte Rad aufgebracht wird, und die besagte Drehgeschwindigkeit beeinflusst;
   - als Ausgabe einen Sollwert der Steuerung des auf das besagte Rad aufzubringenden Motordrehmoments übertragen, wobei dieser Sollwert den Wert des von zumindest einem Nutzer auf das besagte Rad übertragenen Antriebsdrehmoments darstellt;

   wobei die besagten Verarbeitungseinrichtungen das besagte Gesamtdrehmoment durch Schätzen der unbekannten Eingabe, die besagtes Gesamtdrehmoment darstellt, aus der besagten Drehgeschwindigkeit durch Berechnen des inversen Modells schätzen, wobei das von dem Nutzer aufgebrachte Drehmoment von dem Gesamtdrehmoment abgezogen wird, auf Grundlage der anderen, bekannten Drehmomente, die das geschätzte Gesamtdrehmoment bilden.

12. Elektrischer Rollstuhl nach Anspruch 11, **dadurch gekennzeichnet, dass** die Verarbeitungseinrichtungen (40) auf der gleichen Steuerplatine vorgesehen sind, die an dem Chassis des Rollstuhls befestigt ist, wobei eine bidirektionale Verknüpfung (43, 44) die besagte Platine mit dem besagten Motor (41, 42) verbindet, um den besagten Sollwert an jeden Motor zu übermitteln und die besagte Messung der Drehgeschwindigkeit zu empfangen.

13. Elektrischer Rollstuhl nach einem der Ansprüche 11 oder 12, **dadurch gekennzeichnet, dass** für jedes Rad das Antriebsdrehmoment über einen Handlauf (2) übertragen wird, der an das Rad (1) gekoppelt ist.

14. Elektrischer Rollstuhl nach einem der Ansprüche 11 bis 13, **dadurch gekennzeichnet, dass** für jedes Rad das Antriebsdrehmoment von einer dritten Person übertragen wird, die den Rollstuhl schiebt.

**Claims**

1. A method for electrically assisting with a propulsion of a rolling system (10) comprising at least one driving wheel (1) driven by an electric motor (41, 42), the torque applied by said motor being a function of a propulsion torque transmitted by at least one user to said driving wheel, **characterized in that** said method comprises:

   - a preliminary step of storing in memory an unknown input model representing a weighted system, which is a function of the geometry and mass of the weighted system, and having as output data a rotational speed of said driving wheel;
   - a step of estimating said unknown input, the unknown input to be estimated being a total torque applied to said wheel, influencing said rotational speed, said total torque being estimated from said rotational speed by calculating the reverse model;

   the propulsion torque transmitted by the user being deduced from said estimated total torque based on the other known torques that make up the total torque.

2. The method as claimed in claim 1, **characterized in that** the torque applied by said motor is slaved to a reference, possibly variable, representative of the value of the propulsion torque transmitted by the user.

3. A device for electrically assisting with propulsion adapted to equip a rolling system (10) comprising at least one driving wheel, **characterized in that** said device comprises at least:

- an electric motor (41, 42) able to be fixed to said driving wheel (1) to drive the rotation thereof;
- a sensor adapted to measure a rotational speed of said driving wheel (1);
- processing means (40):

- receiving as input the measurement of said rotational speed;
- storing in memory an unknown input model representing the weighted system, which is a function of the geometry and mass of said weighted system, and having as output data said rotational speed by calculating the reverse model, the unknown input being a total torque applied to said wheel, influencing said rotational speed;
- transmitting as output a control reference commanding a motor torque to be applied to said wheel, said control reference being representative of the value of a propulsion torque transmitted by at least one user to said wheel,

said processing means estimating said total torque by estimating the unknown input representing said total torque from said rotational speed by calculating the reverse model, the propulsion torque transmitted by the user being deduced from the total torque based on the other known torques that make up the total torque.

4. The device as claimed in claim 3, **characterized in that** with the motor (41, 42) being of a brushless type, said sensor is integrated into the motor, the rotational speed of said at least one driving wheel being measured from a rotor speed of said motor.

5. The device as claimed in claim 3, **characterized in that** the motor torque is slaved to said control reference.

6. A kit for electrically assisting with a propulsion of a wheelchair (10) comprising two driving wheels (1), **characterized in that** it comprises at least:

- two electric motors (41, 42), each motor being adapted to be fixed to a driving wheel (1) to drive the rotation thereof;
- two sensors, each one being able to measure a rotational speed of one driving wheel;
- for each driving wheel, processing means (40):

- receiving as input the measurement of its rotational speed;
- storing in memory an unknown input model representing a weighted chair, which is a function of the geometry and mass of said weighted chair, and having as output data the rotational speed of said wheel, the unknown input being a total torque applied to said wheel, influencing said rotational speed;
- transmitting as output a control reference commanding a motor torque to be applied to said wheel, said reference being possibly variable and representative of the value of a propulsion torque transmitted by at least one user to said wheel,

said processing means estimating said total torque by estimating the unknown input representing said total torque from said rotational speed by calculating the reverse model, the propulsion torque transmitted by the user being deduced from the total torque based on the other known torques that make up the total torque.

7. The kit as claimed in claim 6, **characterized in that** with said motors (41, 42) being of a brushless type, each sensor is integrated into one of said motors, the rotational speed of a wheel being measured from a rotor speed of the motor.

8. The kit as claimed in claim 6 or 7, **characterized in that** the processing means (40) are installed on one or more control boards, adapted to be fixed to a chassis of said chair, a two-way link (43, 44) connecting said control board to each motor (41, 42) in order to transmit said reference to each motor and to receive said rotational speed measurement.

9. The kit as claimed in any one of claims 6 to 8, **characterized in that**, for each wheel, the propulsion torque is transmitted via a hand rim (2) coupled to the wheel (1).

10. The kit as claimed in any one of claims 6 to 9, **characterized in that**, for each wheel, the propulsion torque is transmitted by a third party pushing said chair.

11. An electric wheelchair, **characterized in that** it comprises a device as claimed in any one of claims 3 to 5, said chair comprising two driving wheels (1), an electric motor (41, 42) being fixed to each wheel in order to drive the rotation thereof, for each driving wheel, the processing means (40):

   - receiving as input a measurement of the rotational speed of said wheel;
   - storing in memory a model considering an unknown input representing said weighted chair, which is a function of the geometry and mass of said weighted chair, and having as output data the rotational speed of said wheel, the unknown input being the total torque applied to said wheel, influencing said rotational speed;

   transmitting as output the control reference commanding the motor torque to be applied to said wheel, said reference being representative of the value of the propulsion torque transmitted by at least one user to said wheel, said processing means estimating said total torque by estimating the unknown input representing said total torque from said rotational speed by calculating the reverse model, the propulsion torque transmitted by the user being deduced from the total torque based on the other known torques that make up the total torque.

12. The electric wheelchair as claimed in claim 11, **characterized in that** the processing means (40) are installed on a control board, fixed to a chassis of said chair, a two-way link (43, 44) connecting said control board to each motor (41, 42) in order to transmit said control reference to each motor and to receive said rotational speed measurement.

13. The electric wheelchair as claimed in claim 11 or 12, **characterized in that**, for each wheel, the propulsion torque is transmitted via a hand rim (2) coupled to the wheel (1).

14. The electric wheelchair as claimed in claim 11 or 13, **characterized in that**, for each wheel, the propulsion torque is transmitted by a third party pushing said chair.

FIG.1

FIG.2a

FIG.2b

FIG.3

FIG.4